# EUROPÄISCHE PATENTSCHRIFT

(11) **EP 1 243 300 B1**
(45) Veröffentlichungstag und Bekanntmachung des Hinweises auf die Patenterteilung: **02.06.2004**
(21) Anmeldenummer: 01107077.8
(22) Anmeldetag: 21.03.2001
(51) Int. Cl.: B01D 29/15, B01D 29/52, B01D 29/66

(54) **Kerzenfiltervorrichtung für die Bierfiltration**
Filter candle device for beer filtration
Filtre à bougies filtrantes pour la filtration de la bière

(43) Veröffentlichungstag der Anmeldung: 25.09.2002
(73) Patentinhaber: Anton Steinecker Maschinenfabrik GmbH, 85356 Freising-Attaching (DE)
(72) Erfinder: Hahn, Adolf, 92726 Waidhaus (DE); Banke, Friedrich, 84416 Inning am Holz (DE); Flossmann, Rudolf, 85416 Langenbach (DE); Gratzer, Harald, 85459 Berglern (DE); Kain, Josef, 85417 Marzling (DE)
(74) Vertreter: Grünecker, Kinkeldey, Stockmair & Schwanhäusser Anwaltssozietät

(56) Entgegenhaltungen:
- EP-A- 0 064 795
- US-A- 2 954 873
- US-A- 4 439 327
- US-A- 5 152 815
- US-A- 5 594 161

## Beschreibung

Die Erfindung betrifft einen Bierfilter, der einen Filterkessel mit einem Filtratzulauf und einen Unfiltratraum, in dem mehrere Filterkerzen angeordnet sind, umfasst.

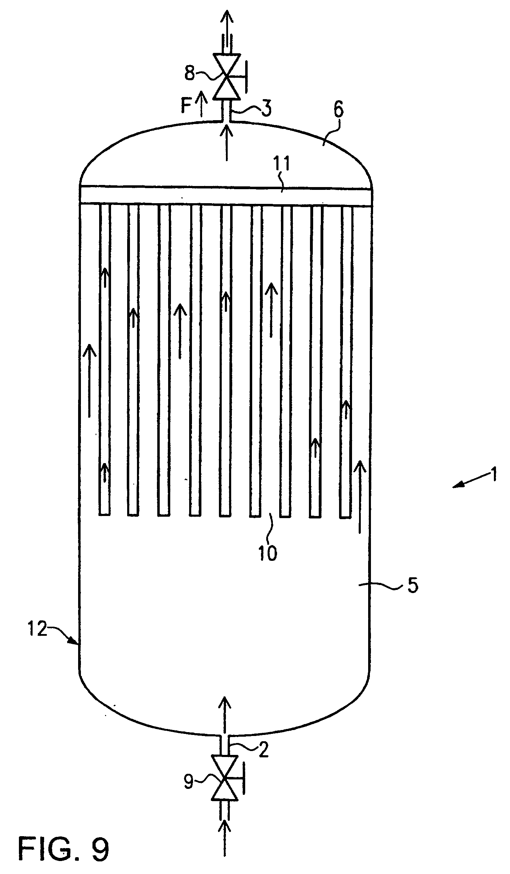

Es ist bekannt, Anschwemmfilter wie beispielsweise in Fig. 9 gezeigt zur Bierfiltration und Stabilisierung zu verwenden. Ein Bierfilter der eingangs genannten Art umfasst einen Filterkessel 12, der durch eine Abtrennplatte 11 in einen Filtratraum 6 und einen Unfiltratraum 5 unterteilt wird. Im Filterkessel befinden sich Filterkerzen 10, an denen eine Anschwemmschicht ausgebildet ist. Das Unfiltrat gelangt über den Zulauf 2 in den Unfiltratraum 5 und tritt durch die Filterkerzen 10 hindurch in den Filtratraum 6 ein, von wo es als Filtrat über den Ablauf 3 entnommen werden kann. Nach dem Filtriervorgang müssen die Filterkerzen 10 von der Anschwemmschicht gereinigt werden. Dies geschieht durch einen Rückspülvorgang. Bei der in Fig. 9 gezeigten Anordnung wird dabei Reinigungsflüssigkeit, wie z.B. Wasser durch die Filterkerzen 10 entgegen der Pfeilrichtung nach unten geleitet. Dadurch, dass die Reinigungsflüssigkeit wieder über den Filtratraum 6 in alle Filterkerzen gleichzeitig geleitet wird, ist ein hoher Spüldruck erforderlich. Außerdem kann dadurch der Reinigungsvorgang nicht immer gleichmäßig gut für alle Kerzen erfolgen und darüber hinaus auch unangemessen lange andauern.

Die Druckschrift EP-A-0064795 beschreibt einen Eindickfilter mit einem Kessel, einem Zulauf und Filterkerzen, die in einzelne Ablaufleitungen münden. Die Ablaufleitungen münden über Ventile in das Ablaufrohr. Es ist weiter eine Luftleitung unterhalb oder oberhalb der Rohre angeordnet, wobei die Rohre über Stutzen mit den Sammelrohren verbunden sind. Die Luftleitung ist mit den Leitungen über Ventile verbunden. Während der Filtration wird beispielsweise ein Ventil geschlossen, um den Filtratablauf zu unterbrechen, wobei gleichzeitig das Luftventil geöffnet wird, um Luft. oder ein anderes Rückspülmittel über das Rohr zu leiten, um einen Druckstoß hervorzurufen.

Es ist Aufgabe der vorliegenden Erfindung einen verbesserten Bierfilter bereitzustellen.

Erfindungsgemäß wird diese Aufgabe durch die kennzeichnenden Merkmale des Anspruchs 1 gelöst.

Der erfindungsgemäße Bierfilter ist platzsparend aufgebaut, da kein großvolumiger Kopfraum mehr notwendig ist. Darüber hinaus ist ein effizienterer Rückspülvorgang möglich. Weiter ergibt sich der Vorteil, dass sich eine erhebliche Verschnittreduzierung ergibt.

Gemäß der vorliegenden Erfindung werden die Filterkerzen über Ablaufleitungen in mindestens zwei Gruppen zusammengefasst, so dass das Filtrat von den Filterkerzen über die entsprechenden Ablaufleitungen den mindestens zwei separaten Abläufen zugeführt wird.

Der Filtratablauf erfolgt somit nicht über einen Filtratsammelraum im oberen Bereich des Filters, sondern dadurch, dass die Filterkerzen zumindest in zwei Gruppen zusammengefasst werden und diese Gruppen getrennt ausgeleitet werden. Der Vorteil hier liegt insbesondere darin, dass man beim Rückspülen die zur Verfügung stehenden Spüldrücke auf die jeweiligen Untergruppen konzentrieren kann, so dass sich eine effektivere Rückspülmöglichkeit ergibt. Die einzelnen Gruppen können also getrennt, d.h. mit mehrfacher Fließgeschwindigkeit zurückgespült werden, was zu einer effizienteren Reinigung führt.

Des Weiteren kann bei der Filtration durch unterschiedliches Zu- und Abschalten der einzelnen Gruppen auf die Filterleistung Einfluss genommen werden.

Die Ablaufleitungen sind Rohrleitungen, in die die Filterkerzen münden. Dabei können die Ablaufleitungen in einer Ebene senkrecht zu den Filterkerzen parallel zueinander liegende, beidseitig seitlich geschlossene erste Rohre, in die die Filterkerzen münden, wobei jedes der ersten Rohre mit einem von mindestens zwei weiteren Rohren verbunden ist, die oberhalb der ersten Rohre liegen, und die mit den mindestens zwei Abläufen verbunden sind. Eine derartige Anordnung ist stabil und platzsparend. Dadurch, dass keine Abtrennplatte zum Abtrennen des Filterkessels in Filtrat und Unfiltratraum mehr notwendig ist, kann eine optimale Entlüftung des Filters erreicht werden. Die bekannten Gasblasen unter der Abtrennplatte. welche auch durch Schrägstellen des Filters nicht ausreichend zu entfernen sind, treten nicht mehr auf. Ein weiterer Vorteil betrifft die Reinigung, da die Unterseite einer Abtrennplatte, und insbesondere Sedimentationen von Kieselgur oder sonstigen Filterhilfsmitteln auf der Abtrennplatte schwer oder nur mit zusätzlichen Einrichtungen bzw. nur durch Öffnen des Behälters zu reinigen sind.

Dadurch, dass die zweiten Rohre oberhalb der ersten Rohre z.B. unter einem Winkel von 90 Grad zu den unteren Rohren angeordnet sind, können sie über ihre gesamte Länge Verbindungsstellen zu den unteren Rohren aufweisen, so dass über jeden der mindestens zwei Abläufen im Filterkessel gleichmäßig verteilte Filterkerzen erreicht werden können.

Gemäß einem bevorzugten Ausführungsbeispiel umfasst der Bierfilter mehrere Gruppen von Filterkerzen mit entsprechenden Ablaufleitungen, die im Filterkessel kaskadenartig übereinander angeordnet sind. Durch die kaskadenartig Übereinanderangeordneten Gruppen von Filterkerzen kann ein preiswerter, schlanker, hoher Filterkessel verwendet werden, bzw. bestehende schlanke, hohe Filterkessel anderer bekannter Filtersysteme, wie Horizontalsiebfilter, zur Nachrüstung verwendet werden.

Die vorliegende Erfindung wird unter Zuhilfenahme der nachfolgend aufgeführten Figuren näher erläutert:
- Fig. 1: zeigt schematisch einen Längsschnitt gemäß einem ersten Ausführungsbeispiel der vorliegenden Erfindung.
- Fig. 2: zeigt schematisch einen Längsschnitt durch ein Beispiel eines Bierfilters, der nicht der vorliegenden Erfindung entspricht.
- Fig. 3: zeigt schematisch eine Lochplatte, die nicht der Erfindung entspricht
- Fig. 4: zeigt schematisch eine weitere Form einer Lochplatte, die nicht der Erfindung entspricht.
- Fig. 5: zeigt einen vergrößerten Ausschnitt der Ablaufleitungen, wie sie in Fig. 1 gezeigt sind, gemäß der vorliegenden Erfindung.
- Fig. 6: zeigt einen Querschnitt durch die in Fig. 1 und 5 gezeigten Ablaufleitungen.
- Fig. 7: zeigt einen Querschnitt entlang der Linie IV-IV in Fig. 1.
- Fig. 8: zeigt einen Filterkessel mit mehreren kaskadenartig übereinander angeordneten Gruppen von Filterkerzen
- Fig. 9: zeigt einen Bierfilter nach dem Stand der Technik,
- Fig.10: zeigt schematisch einen Längsschnitt durch ein Beispiel einer Form eines Bierfilters, der nicht der vorliegenden Erfindung entspricht.
- Fig. 10a: zeigt einen Schnitt durch eine Ablaufleitung an einer Lochplatte , wie sie in Fig. 10 gezeigt ist.

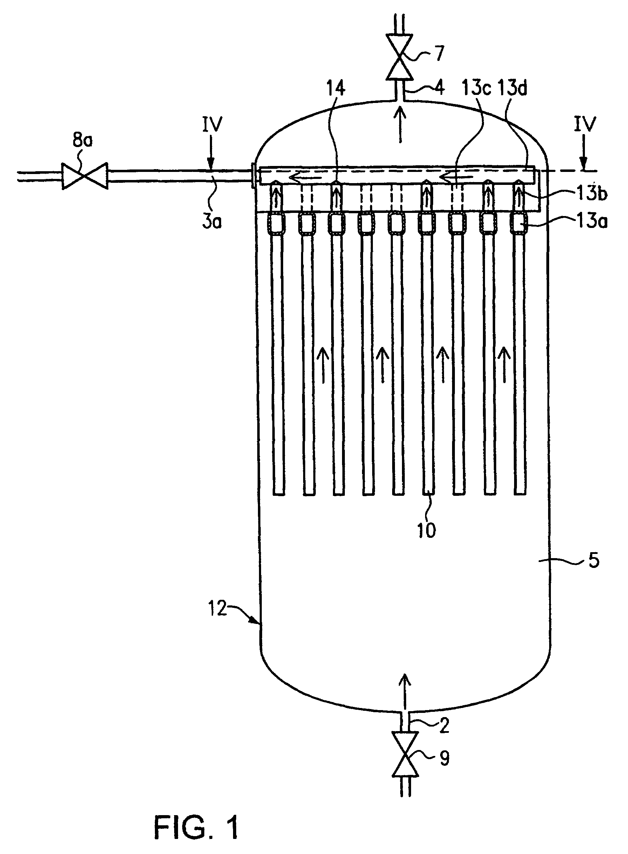

Wie aus Fig. 1 hervorgeht, umfasst der erfindungsgemäße Bierfilter 1 einen Filterkessel 12 mit einem Zulauf 2 für Unfiltrat, z.B. Bier, dem Filterhilfsmittel zugesetzt wurde. Der Zulauf 2 ist z.B. mengenmäßig über das Stellventil 9 oder aber über eine nichtdargestellte Pumpe regulierbar. Der Filterkessel 12 umfasst einen Unfiltratraum 5 in dem sich mehrere Filterkerzen 10 vertikal erstrecken. Desweiteren ist ein Ablauf 4 für Unfiltrat mit einem Stellventil 7 vorgesehen, wodurch ein Teil des Unfiltrats aus dem Filterkessel 12 ausgeleitet werden kann, um somit eine gezielte Unfiltratströmung zur besseren Anschwemmung des Unfiltrats an die Filterkerzen 10 zu erzielen. Das Unfiltrat, das über den Ablauf 4 abgeführt wurde, kann über eine nichtdargestellte Bypassleitung erneut dem Unfiltratraum 5 z.B. über den Zulauf 2 zugeführt werden.

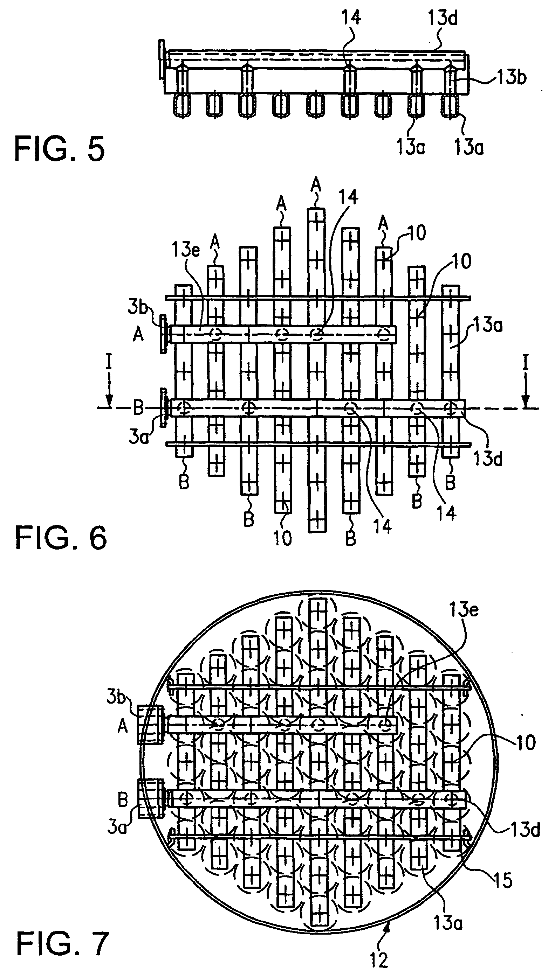

Die Filterkerzen münden hier in erste Rohrleitungen 13a und werden von diesen getragen, wie beispielsweise aus den Fig. 1 und 5 bis 7 hervorgeht, wobei Fig. 5 ein Schnitt entlang der Linie I-I der Fig. 6 ist. Wie insbesondere aus Fig. 7 hervorgeht, sind die vertikal angeordneten Filterkerzen 10 gleichmäßig über den Querschnitt des Filterkessels 12 verteilt angeordnet. Die Rohrleitungen 13a liegen in einer Ebene senkrecht zu den Filterkerzen 10 parallel zueinander und sind seitlich verschlossen. Dabei haben die Rohrleitungen 13a, die in der Mitte liegen, eine größere Länge als die seitlich angeordneten Rohrleitungen 13a.

Die Filterkerzen 10 münden in entsprechenden Öffnungen der Rohrleitungen 13a und werden von den Rohrleitungen 13a getragen. Oberhalb der Rohrleitungen 13a erstreckt sich unter einem vorbestimmten Winkel, vorzugsweise 90 Grad, mindestens eine weitere Rohrleitung, die die Rohrleitungen 13a zusammenfasst. Bei diesem Ausführungsbeispiel gibt es zwei derartige Rohrleitungen 13e und 13d, die mit den Abläufen 3a und 3b verbunden sind. Die Rohrleitungen 13e und 13d weisen über ihre Gesamtlänge verteilt Verbindungsstellen 14 auf, die über Zwischenrohre 13b mit den unteren Rohren 13a verbunden sind. D. h., dass die obere Rohrleitung 13d über die Zwischenrohre 13b mit den Rohrleitungen 13a verbunden sind und die obere Rohrleitung 13e über die Zwischenrohre 13c mit den Rohrleitungen 13a verbunden sind. Die Rohrleitungen 13e, d könnten aber auch direkt ohne Zwischenrohre 13b, c an den Verbindungsstellen 14 verbunden sein.

Bei diesem Ausführungsbeispiel werden also die Filterkerzen 10 über die Ablaufleitungen 13a-e in zwei Gruppen A und B zusammengefasst, so dass das Filtrat von den Filterkerzen 10 über die entsprechenden Ablaufleitungen 13a-e den zwei Abläufen 3a und 3b zugeführt wird. Somit werden mit den entsprechenden Abläufen 3a oder 3b nicht nur Filterkerzen in einem bestimmten Bereich erreicht, sondern Filterkerzen, die gleichmäßig über den ganzen Querschnitt des Filterkessels verteilt sind. Dies ist insbesondere beim Rückspülen von Vorteil, da eine gleichmäßige Reinigung erzielt werden kann.

Die Rohrleitungen 13a-e werden über Träger 15 an den Kesselwänden befestigt. Bei dieser Anordnung wird das Filtrat über die Ablaufleitungen 13a-e abgeleitet, so dass keine weitere Abtrennplatte zur Ausbildung eines Unfiltratraums notwendig ist.

Bei der Filtration gelangt Unfiltrat über den Zulauf 2 in den Unfiltratraum 5 und gelangt durch die Anschwemmschicht in die Filterkerzen 10. Das so erzeugte Filtrat erreicht dann über die Filterkerzen 10 die Ablaufleitungen 13a. Jede Ablaufleitung 13a ist mit einem der mindestens zwei oberen Rohre 13e oder 13d über eine Verbindungsstelle 14 verbunden, so dass das Filtrat aus den Rohrleitungen 13a über die Verbindungsstellen 14 in die entsprechenden oberen Rohrleitungen 13e und 13d eintritt und den entsprechenden Abläufen 3a und 3b zugeführt wird.

Beim Rückspülen wird den Filterkerzen über die Abläufe 3a und 3b Reinigungsflüssigkeit zugeführt. Dabei ist es möglich, dass die Gruppen A und B getrennt werden, d.h., dass bei der Rückspülung nur einer Gruppe Reinigungsflüssigkeit zugeführt wird, so dass mit einer mehrfachen Fließgeschwindigkeit und erhöhtem Druck rückgespült werden kann. Somit ist eine effizientere Reinigung möglich, wobei auch Reinigungsflüssigkeit gespart werden kann.

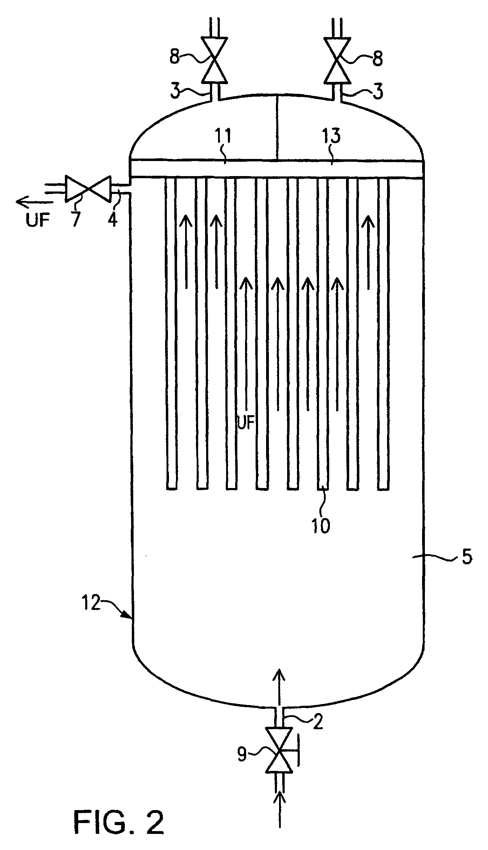

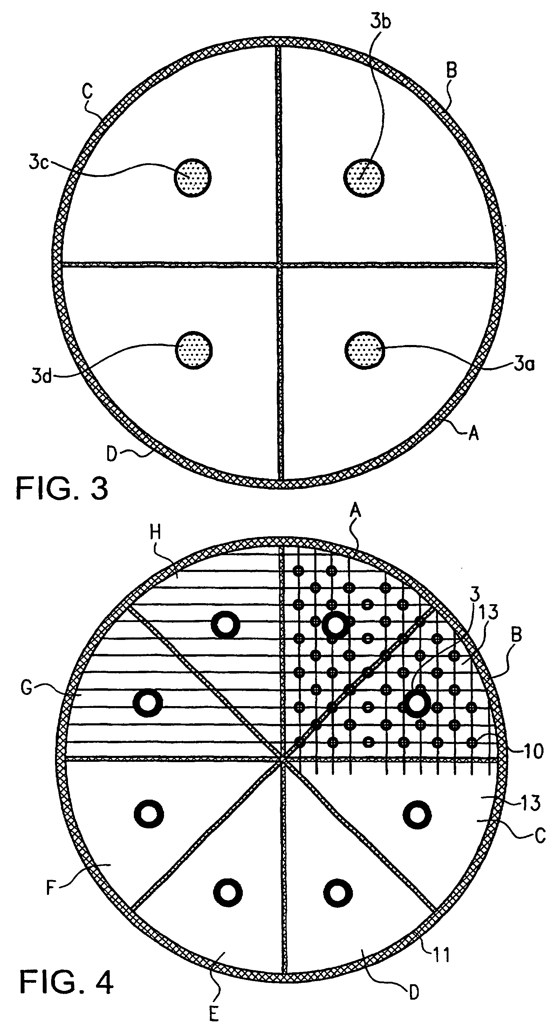

Fig. 2 zeigt ein Beispiel eines Bierfilters, der nicht der vorliegenden Erfindung entspricht. Wie bei dem in Fig. 1 gezeigten ersten Ausführungsbeispiel umfasst der in Fig. 2 gezeigte Bierfilter ebenfalls einen Filterkessel 12 mit einem Unfiltratzulauf 2, einem Regelventil 9 für den Unfiltratzulauf 2, sowie eine Vielzahl gleichmäßig im Filterkessel 12 verteilte vertikal angeordnete Filterkerzen 10, die aber hier an einer Lochplatte 11 aufgehängt sind. Figuren 3 und 4 zeigen Beispiele für derartige Lochplatten. Die Filterkerzen 10 münden, wie aus Fig. 4 hervorgeht, in Öffnungen in der Lochplatte 11, die in mehrere Kammern 13, die hier die Ablaufleitungen darstellen, unterteilt ist. Die Lochplatte ist bei dieser Ausführungsform beispielsweise in acht Segmente eingeteilt, wobei jedes Segment seinen eigenen Auslauf 3 aufweist (in Fig. 2 sind zwei Ausläufe (3) dargestellt). Somit werden die Filterkerzen 10 über die entsprechenden Ablaufleitungen, hier die Kammern 13, die auf der Lochplatte ausgebildet sind, in acht Gruppen zusammengefasst, so dass das Filtrat von den Filterkerzen 10 über die entsprechenden Kammern 13 den entsprechenden Abläufen 3 zugeführt werden kann. Die Abläufe 3 können extern wieder zusammengefasst werden.

Bei der Filtration läuft Unfiltrat über den Zulauf 2 in den Unfiltratraum 5 und tritt durch die Anschwemmschicht in die Filterkerzen 10. Das Filtrat wird dann weiter durch die Lochplatte 11 in die Kammern 13 geleitet und den entsprechenden Ausläufen 3 zugeführt. Gleichzeitig kann zur besseren Anströmung der Filterkerzen ein Ablauf 4 für einen Unfiltratstrom bereitgestellt werden, der sich am oberen Enden der Filterkerzen in Bezug auf die Lochplatte 11 befindet. Wenn die Lochplatte zusätzliche Öffnungen für das Unfiltrat aufweist, kann der Ablauf 4 für einen Teil des Unfiltrats auch oberhalb der Lochplatte angeordnet sein, da dann ein Unfiltratstrom durch die Lochplatte hindurch zum oberen Ende des Filterkessels 12 strömen kann. Der Unfiltratstrom kann über eine nichtdargestellte Bypassleitung z.B. über den Zulauf 2 erneut dem Unfiltratraum 5 zugeführt werden.

Ebenso wie die in Fig. 1 gezeigte Ausführungsform weist auch dieses Beispiel keinen separaten Filtratraum auf. Auch hier ergeben sich bei der Rückspülung die gleichen Vorteile wie im Zusammenhang mit Fig. 1 beschrieben wurden, nämlich dass die einzelnen Gruppen (A-H) bei der Rückspülung voneinander getrennt werden können, so dass einzelne Filterkerzen mit größerer Fließgeschwindigkeit und erhöhtem Druck zurückgespült werden können. Der Vorteil bei dieser Anordnung besteht darin, dass durch einfaches Austauschen der herkömmlichen Abtrennplatten mit der Lochplatte, die mehrere Ausläufe 3 aufweist, die vorliegende Lochplatte in bereits bestehende Systeme integriert werden kann.

Fig. 3 zeigt eine weitere Draufsicht auf eine weitere Lochplatte für einen Bierfilter, wobei hier die Lochplatte in vier Segmente, d.h. in vier Kammern mit vier Ausläufen 3a, b, c, d unterteilt ist. Die Lochplatte kann in vier, sechs oder acht Segmente je nach Kesselgröße eingeteilt werden.

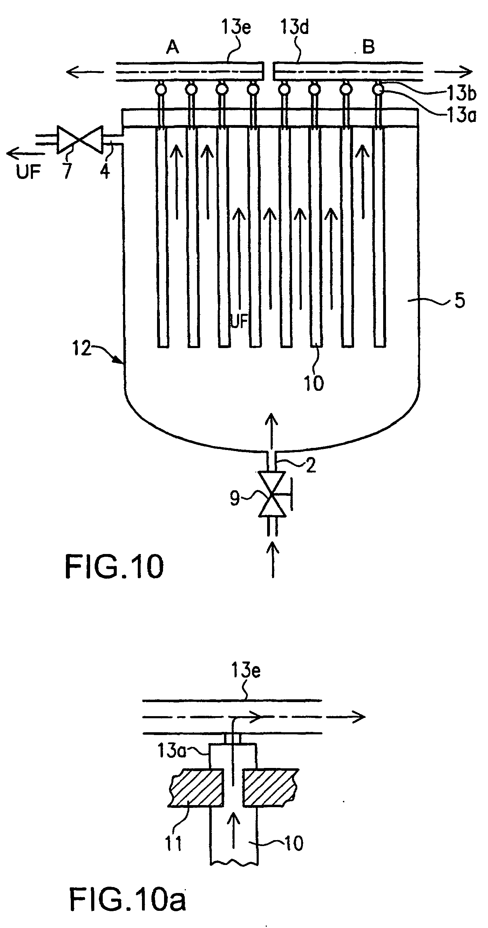

Fig. 10 zeigt eine weitere mögliche Bauform, die nicht der vorliegenden Erfindung entspricht, wobei ähnlich wie bei der in Fig. 2 gezeigten Bauform die Filterkerzen 10 in eine Lochplatte 11 münden. Bei Verwendung einer ausreichend stabilen Lochplatte kann die Lochplatte selbst als Deckel dienen. Die Filterkerzen 10 sind über Öffnungen in der Lochplatte 11 ähnlich wie in Fig. 5 und 6 gezeigt, mit Ablaufleitungen 13a verbunden, die sich in einer Ebene senkrecht zu den Filterkerzen 10 parallel zueinander erstrecken und seitlich verschlossen sind. Die Rohrleitungen 13a können dann z.B. über Zwischenrohre 13b mit mindestens einer weiteren Rohrleitung, in diesem Falle mit zwei Rohrleitungen 13e und 13d, die sich unter einem Winkel zu den Rohrleitungen 13a, vorzugsweise unter 90°, erstrecken, verbunden werden. Durch die Rohrleitungen 13e und 13d werden die Filterkerzen 10 in zwei Gruppen A, B zusammengefasst und entsprechenden Abläufen 3 (nicht dargestellt) zugeführt.

Statt der untersten Rohrreihe 13a in Fig. 10 können auch Sammelschächte 13 auf die Lochplatte 11 geschweißt werden, die entsprechend weiter verrohrt sind, wie beispielsweise aus Fig. 10a hervorgeht.

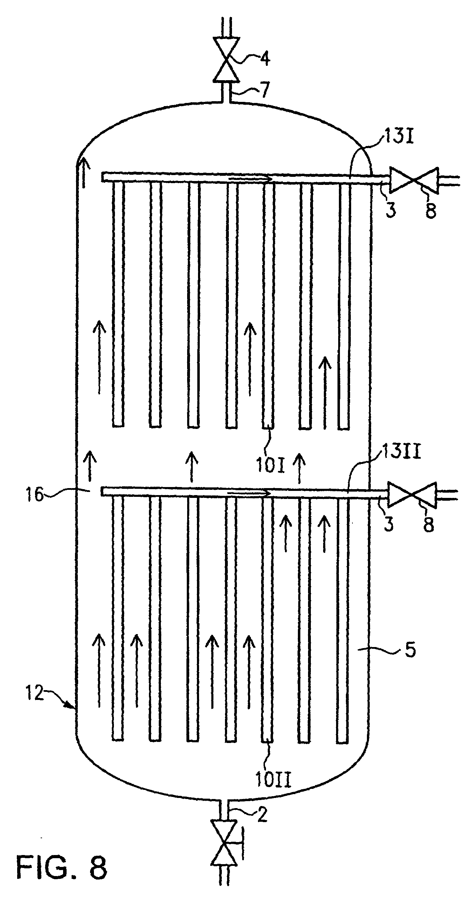

Dadurch, dass der erfindungsgemäße Bierfilter keinen Filtratraum in Form eines Kopfraumes, wie beim jetzigen Stand der Technik, mehr aufweist, ist es möglich, mehrere Gruppen von Filterkerzen mit entsprechenden Ablaufleitungen kaskadenartig übereinander anzuordnen. Wie Fig. 8 zeigt, weist der Filterkessel 12 erste Filterkerzen, die vertikal nebeneinander angeordnet sind, siehe 10_{I} mit entsprechenden Ablaufleitungen 13_{I}, auf sowie zwei parallel vertikal zueinander angeordnete Filterkerzen 10_{II} mit entsprechenden Ablaufleitungen 13_{II} auf. Die Ablaufleitungen 13_{I} und 13_{II} sind z.B. so wie im Zusammenhang mit dem Ausführungsbeispiel in Fig. 5 bis 7 beschrieben aufgebaut. Wenn die in Fig. 5 bis 7 gezeigten Rohrleitungen verwendet werden, kann somit das Unfiltrat leicht durch die Ablaufleitungen 13 hindurchtreten und erreicht dann die oberhalb angeordneten Filterkerzen 10_{I}.

Damit eine gezielte Unfiltratströmung aufrechterhalten werden kann, ist es vorteilhaft am oberen Ende des Filterkessels 12 einen Ablauf 4 für das Unfiltrat vorzusehen, über den das Unfiltrat abgeführt wird und gegebenenfalls über eine Bypassleitung (nicht dargestellt) dem unteren Ende des Unfiltratraums 5 z.B. über den Zulauf 2 zugeführt werden kann.

## Patentansprüche

1. Bierfilter mit einem Filterkessel (12), mit einem Zulauf (2) und mit einem Unfiltratraum (5), in dem mehrere Filterkerzen (10) angeordnet sind,
**dadurch gekennzeichnet, dass** die Filterkerzen über Ablaufleitungen (13a-e) zusammengefasst werden, so dass das Filtrat von den Filterkerzen (10) über die entsprechenden Ablaufleitungen (13a-e) mindestens zwei Abläufen (3a, 3b) zugeführtwerden kann, und dass die Ablaufleitungen in einer Ebene senkrecht zu den Filterkerzen (10) parallel zueinanderliegende beidseitig seitlich geschlossene erste Rohre umfassen, in die die Filterkerzen münden, wobei jedes der ersten Rohre innerhalb des Filterkessels mit einem von mindestens zwei weiteren Rohren verbunden ist, die sich oberhalb der ersten Rohre unter einem vorbestimmten Winkel erstrecken, und die mit den mindestens zwei Abläufen (3a, b) verbunden sind, wobei die Rohre, die oberhalb der ersten Rohre liegen, mehrere über ihre Gesamtlänge verteilte Verbindungsstellen (14) zu den ersten Rohrleitungen aufweisen.

2. Bierfilter nach Anspruch 1, **dadurch gekennzeichnet, dass** im Filterkessel (12) mehrere Gruppen von Filterkerzen (10) mit entsprechenden Ablaufleitungen kaskadenartig übereinander angeordnet sind.

## Claims

1. A beer filter with a filter vessel (12) comprising a feed means (2) and an non-filtrate chamber (5) having arranged therein a plurality of filter candles (10),
**characterized in that** the filter candles are combined via discharge lines (13a-e) so that the filtrate coming from the filter candles (10) can be supplied via the respective discharge lines (13a-e) to at least two discharge means (3a, 3b), and that the discharge lines comprise first pipes which are disposed parallel to one another in a plane extending perpendicular to the filter candles (10) and which are closed on both sides thereof, the filter candles opening into said first pipes, and each of said first pipes being connected within the filter vessel to one of at least two further pipes extending above said first pipes at a predetermined angle and connected to said at least two discharge means (3a, b), the pipes located above said first pipes being provided with a plurality of connection points (14) which are distributed over the entire length thereof and through which they communicate with said first pipes.

2. A beer filter according to claim 1, **characterized in that** several groups of filter candles (10) provided with respective discharge lines are cascaded on top of one another in the interior of the filter vessel (12).

## Revendications

1. Filtre à bière comprenant une cuve de filtration (12), une admission (2) et un espace de non-filtrat (5) dans lequel sont disposées plusieurs bougies filtrantes (10), **caractérisé en ce que** les bougies filtrantes sont regroupées par l'intermédiaire de conduites d'évacuation (13a - e) de sorte que le filtrat peut être envoyé à partir des bougies filtrantes (10), par l'intermédiaire des conduites d'évacuation correspondantes (13a - e), à au moins deux évacuations (3a, 3b), et que les conduites d'évacuation comprennent des premiers tubes fermés latéralement des deux côtés, parallèles entre eux dans un plan perpendiculairement aux bougies filtrantes (10) et dans lesquels débouchent ces dernières, chacun des premiers tubes à l'intérieur de la cuve de filtration étant raccordé à l'un d'au moins deux autres tubes qui s'étendent au-dessus des premiers sous un angle prédéfini et sont raccordés au deux évacuations (3a, b), au moins, les tubes situés au-dessus des premiers présentant plusieurs points de jonction (14) avec les premières tuyauteries répartis sur la totalité de leur longueur.

2. Filtre à bière suivant la revendication 1, **caractérisé en ce que** plusieurs groupes de bougies filtrantes (10), avec des conduites d'évacuation correspondantes, sont superposés en cascade dans la cuve de filtration (12).
